# EUROPÄISCHE PATENTANMELDUNG

(11) **EP 1 931 100 A1**
(43) Veröffentlichungstag der Anmeldung: **11.06.2008**
(21) Anmeldenummer: 06025141.0
(22) Anmeldetag: 05.12.2006
(51) Int. Cl.: H04L 29/06

(54) **Verfahren zum Betreiben eines Kommunikationsnetzwerks, insbesondere eines auf dem 3GPP-Standard beruhenden Kommunikationsnetzwerks**

(71) Anmelder: Nokia Siemens Networks GmbH & Co. KG, 81541 München (DE)
(72) Erfinder: Shen, Jiadong, Dr.., 81379 München (DE)

(57) **Zusammenfassung**

Die Erfindung beschreibt ein Verfahren zum Betreiben eines Kommunikationsnetzwerks. Das erfindungsgemäße Verfahren weist einen Server (S) und zumindest einen Netzknoten (UE) auf, wobei dem zumindest einen Netzknoten eine öffentliche Identität (IMPU) zugewiesen ist. Dabei wird zwecks Registrierung des zumindest einen Netzknotens (UE) an dem Server (S) eine Assoziation zwischen der öffentlichen Identität (IMPU) und zumindest einem Authentifizierungsparameter (IMPI, Cred) des zumindest einen Netzknotens (UE) einerseits und einer Kontaktadresse (CA) andererseits hergestellt, so dass nach Herstellung der Assoziation durch den zumindest einen Netzknoten (UE) ein Dienst des Kommunikationsnetzwerks in Anspruch genommen werden kann. Ferner wird die Assoziation zwischen der öffentlichen Identität (IMPU) und dem zumindest einen Authentifizierungsparameter (IMPI, Cred) des zumindest einen Netzknotens (UE) und der Kontaktadresse vor einem Auflösen überprüft.

## Beschreibung

Die Erfindung betrifft ein Verfahren zum Betreiben eines Kommunikationsnetzwerks, das einen Server und zumindest einen Netzknoten aufweist, wobei dem zumindest einen Netzknoten eine öffentliche Identität zugewiesen ist. Die Erfindung betrifft ferner ein Kommunikationsnetzwerk sowie einen Server für ein Kommunikationsnetzwerk, das neben dem Server zumindest einen Netzknoten aufweist, wobei dem zumindest einen Netzknoten eine öffentliche Identität zugewiesen ist.

Wie im 3GPP-Standard definiert ist, kann in einem Kommunikationsnetzwerk, dem sog. IP Multimedia Subsystem (IMS), eine öffentliche Identität, die auch als Public User Identity (IMPU) bezeichnet wird, zu einer Kontaktadresse eines IMS-fähigen Netzknotens über eine Registrierungsprozedur unter Verwendung von SIP-Nachrichten assoziiert werden. Eine solche Assoziation zwischen einer öffentlichen Identität und der Kontaktadresse wird auch als "Binding" bezeichnet. Unter einer Kontaktadresse ist neben einer IP-Adresse auch ein Port sowie ein zu verwendendes Transportprotokoll zu verstehen. Nach der Registrierung des Netzknotens bei dem Server wird eine Assoziation zwischen der öffentlichen Identität und der Kontaktadresse in einem sog. IMS-System erstellt, wodurch der Netzknoten in die Lage versetzt wird, über die ihm zugewiesene Kontaktadresse IMS-Dienste in Anspruch zu nehmen. Ein Netzknoten wird häufig auch als Terminal oder Nutzerterminal bezeichnet. Die Assoziation ist üblicherweise für eine vorgegebene Zeitperiode gültig und der Netzknoten muss sich erneut registrieren, um die Gültigkeit der Assoziation zu verlängern.

Um eine nicht authentifizierte Verwendung des IMS-Dienstes zu verhindern, wird im Rahmen der Registrierungs-Prozedur eine Authentifizierung durchgeführt. Zum Zweck der Authentifizierung werden eine private Identität, eine sog. Private User Identity (IMPI), und Credentials verwendet, wobei die Credentials der privaten Identität zugeordnet sind. Im 3GPP-Standard wird davon ausgegangen, dass die private Identität und die Credentials in einer sog. Universal Integrated Circuit Card (UICC) gespeichert sind, wobei eine eindeutige Zuordnung gegeben ist. Dies hat zur Folge, dass lediglich eine einzige Kontaktadresse für jedes Paar einer öffentlichen und privaten Identität gebildet werden kann. Eine Assoziation wird demgemäß durch das Kommunikationsnetzwerk bzw. den Server entfernt oder aufgelöst, wenn eine neue Assoziation für das gleiche Paar einer öffentlichen und privaten Identität registriert wird. Dies könnte beispielsweise dann auftreten, wenn der Netzknoten einen Fehler aufweist und sich nach einer sog. Reboot-Prozedur bei dem Server erneut registriert.

Das IMS nach dem 3GPP-Standard wurde für mobile Netzknoten entwickelt. Nichtsdestotrotz ist auch eine Anwendung zu drahtgebundenen Netzknoten möglich, welche auf dem 3GPP-IMS-System basieren. Es könnte beispielsweise im sog. Next Generation Network (NGN) angewendet werden. In solchen Kommunikationsnetzwerken werden drahtgebundene Netzknoten oder Soft-Clients eingesetzt, bei welchen die Netzknoten-bezogenen Parameter, wie die öffentliche Identität, die private Identität oder die Credentials, manuell in dem Netzknoten konfiguriert werden. Es kann daher vorkommen, dass die gleiche öffentliche Identität, private Identität und Credentials in unterschiedlichen Netzknoten auftreten.

Innerhalb des gegenwärtigen 3GPP-Standars hat eine Konfiguration mehrerer Netzknoten mit der gleichen öffentlichen, privaten Identität und den Credentials bei einer Registrierung an dem IMS-System zur Folge, dass sich der Netzknoten, der sich zuletzt in dem IMS-System, d.h. dem Server, registriert, den IMS-Service empfangen kann und alle anderen Assoziationen der anderen Terminals durch das Kommunikationsnetzwerk aufgelöst werden. Da eine Registrierung lediglich für eine bestimmte Zeitperiode Gültigkeit hat, wird sich jeder Netzknoten innerhalb des IMS erneut registrieren (sog. Re-Register). Dies führt zu einem sog. Toggle-Effekt, bei dem die Netzknoten sich für eine kürze Zeitperiode an dem IMS-System registrieren können und dabei alle vorherigen Assoziationen überschreiben. Die Assoziation bleibt dabei lediglich solange erhalten, bis sich ein weiterer Netzknoten in dem IMS registriert.

Ein derartiges Verhalten ist weder für die Nutzer der Netzknoten noch für einen Betreiber des Kommunikationsnetzwerkes akzeptabel.

Es wurde deshalb daran gedacht, eine Art einer "Netzknoten-Identifikation" einzuführen, welche nicht in dem grundlegenden Spezifikationen SIP RFC 3261 definiert ist. Über diese Netzknoten-Identifikation kann das IMS unterscheiden, ob eine Assoziation durch ein sich rebootendes Terminal oder ein anderes Terminal erstellt wurde. Dabei ist daran gedacht, dass lediglich ein sich rebootendes Terminal eine existierende Assoziation lösen und eine neue erstellen kann. Problematisch bei diesem Vorschlag ist die Umsetzung bei vorhandenen Netzknoten oder Terminals, welche nicht über eine solche Hardware-seitige Netzknoten-Identifikation verfügen.

Es ist daher Aufgabe der vorliegenden Erfindung, ein Verfahren zum Betreiben eines Kommunikationsnetzwerks, ein Kommunikationsnetzwerk sowie einen Server für ein Kommunikationsnetzwerk anzugeben, welche das Auflösen und Überschreiben einer bestehenden Assoziation durch andere Netzknoten nicht erlauben, auch wenn diese Netzknoten über eine korrekte öffentliche und private Identität sowie entsprechend zugeordnete Credentials verfügen.

Diese Aufgabe wird durch die Merkmale der unabhängigen Patentansprüche gelöst. Vorteilhafte Ausführungsformen ergeben sich aus den abhängigen Patentansprüchen.

Bei dem erfindungsgemäßen Verfahren wird zwecks Registrierung des zumindest einen Netzknotens an dem Server eine Assoziation zwischen der öffentlichen Identität und zumindest einem Authentifizierungsparameter des zumindest einen Netzknotens einerseits und einer Kontaktadresse andererseits hergestellt, so dass nach Herstellung der Assoziation durch den zumindest einen Netzknoten ein Dienst des Kommunikationsnetzwerks in Anspruch genommen werden kann. Weiter wird die Assoziation zwischen der öffentlichen Identität und dem zumindest einen Authentifizierungsparameter des zumindest einen Netzknotens und der Kontaktadresse vor einem Auflösen überprüft.

Ein erfindungsgemäßes Kommunikationsnetzwerk, das einen Server und zumindest einen Netzknoten aufweist, wobei dem zumindest einen Netzknoten eine öffentliche Identität zugewiesen ist, ist dazu ausgebildet zwecks Registrierung des zumindest einen Netzknotens an dem Server, eine Assoziation zwischen der öffentlichen Identität und zumindest einem Authentifizierungsparameter des zumindest einen Netzknotens einerseits und einer Kontaktadresse andererseits herzustellen, so dass nach Herstellung der Assoziation durch den zumindest einen Netzknoten ein Dienst des Kommunikationsnetzwerks in Anspruch genommen werden kann. Das Kommunikationsnetzwerk ist weiter dazu ausgebildet, die Assoziation zwischen der öffentlichen Identität und dem zumindest einen Authentifizierungsparameter des zumindest einen Netzknotens und der Kontaktadresse vor einem Auflösen zu überprüfen.

Ein erfindungsgemäßer Server für ein Kommunikationsnetzwerk, das neben dem Server zumindest einen Netzknoten aufweist, wobei dem zumindest einen Netzknoten eine öffentliche Identität zugewiesen ist, ist dazu ausgebildet zwecks Registrierung des zumindest einen Netzknotens an dem Server, eine Assoziation zwischen der öffentlichen Identität und zumindest einem Authentifizierungsparameter des zumindest einen Netzknotens einerseits und einer Kontaktadresse andererseits herzustellen, so dass nach Herstellung der Assoziation durch den zumindest einen Netzknoten ein Dienst des Kommunikationsnetzwerks in Anspruch genommen werden kann. Der Server ist weiter dazu ausgebildet, die Assoziation zwischen der öffentlichen Identität und dem zumindest einen Authentifizierungsparameter des zumindest einen Netzknotens und der Kontaktadresse vor einem Auflösen zu überprüfen.

Durch die vorherige Überprüfung einer bestehenden Assoziation kann vermieden werden, dass sich ein weiterer Netzknoten, der über die selbe öffentliche Identität und ggf. weitere Identitäten verfügt, die an sich noch gültige Assoziation auflöst und damit eine Inanspruchnahme von Diensten unterbindet.

Dabei ist es zweckmäßig, wenn die Assoziation nur dann gelöst wird, wenn bei der Überprüfung die Ungültigkeit der Assoziation festgestellt wird. Das Auflösen einer gültigen Assoziation ist damit nur möglich, wenn zweifelsfrei festgestellt werden kann, dass die Assoziation nicht mehr gültig ist.

Hierzu kann zur Überprüfung der Assoziation von dem Server eine Anfrage-Nachricht an die Kontaktadresse des zumindest einen Netzknotens übertragen werden. Im Fall einer positiven Antwort-Nachricht von der Kontaktadresse des zumindest einen Netzknotens an den Server wird eine gültige Assoziation angenommen, welche nicht aufgelöst wird. Im Fall einer negativen Antwort-Nachricht von der Kontaktadresse des zumindest einen Netzknotens an den Server wird aus dem Inhalt der Antwort-Nachricht auf die Gültigkeit oder Ungültigkeit der Assoziation geschlossen. Im Falle einer gültigen Assoziation wird diese nicht aufgelöst, im Falle einer ungültigen Assoziation kann diese aufgelöst werden. Im Falle einer ausbleibenden Antwort-Nachricht wird auf die Ungültigkeit der Assoziation geschlossen, wodurch diese aufgelöst werden kann.

Erst nach dem Auflösen der Assoziation zwischen dem zumindest einen Identitätsparameter des zumindest einen Netzknotens und einer Kontaktadresse ist das Herstellen einer neuen Assoziation zwischen dem zumindest einen Identitätsparameter des zumindest einen Netzknotens und dieser Kontaktadresse möglich.

Die Anfrage-Nachricht und/oder die Antwort-Nachricht können in Form von SIP-Nachrichten gebildet werden. Dies weist den Vorteil auf, dass bereits gegenwärtig im Einsatz befindliche Netzknoten zur Durchführung des erfindungsgemäßen Verfahrens geeignet sind.

Das Kommunikationsnetzwerk wird gemäß einer Ausführungsform nach dem 3GPP-Standard betrieben. Das Kommunikationsnetzwerk kann alternativ als UMTS- (Universal Mobile Telecommunication Standard) und/oder GSM-Netzwerk (Global System for Mobile Communication) betrieben werden.

Von der Erfindung umfasst ist ferner ein Computerprogrammprodukt, das direkt in den internen Speicher eines digitalen Computers geladen werden kann und Softwarecodeabschnitte umfasst, mit denen die Schritte gemäß beschriebenen Verfahren ausgeführt werden, wenn das Produkt auf einem Computer läuft.

Die Erfindung wird nachfolgend anhand einer Figur näher erläutert.

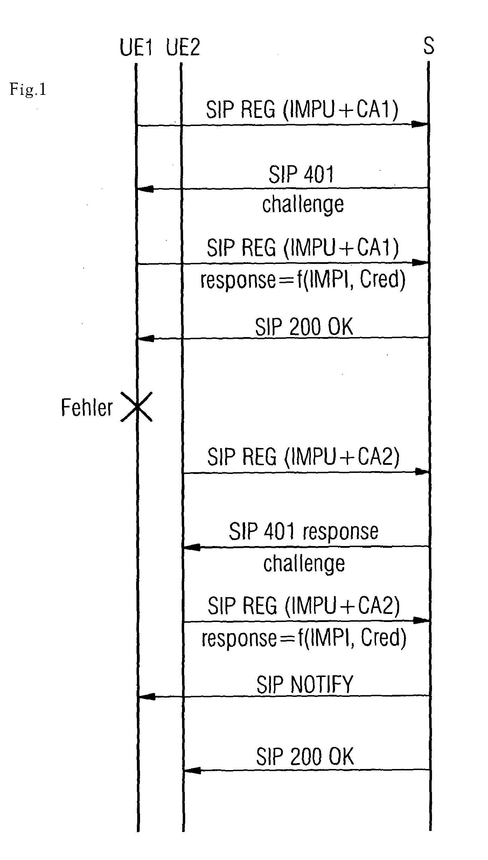

Die einzige Figur zeigt den Kommunikationsablauf in einem IMS bei der Registrierung eines ersten Netzknotens UE1 an einem Server S. Der Server S stellt ebenfalls einen Netzknoten eines Kommunikationsnetzwerks nach dem 3GPP-Standard dar. Zunächst registriert sich der Netzknoten UE1 mittels einer SIP Register-Nachricht(SIP REG), in der er seine öffentliche Identität IMPU zusammen mit einer erwünschten Kontaktadresse CA1 an den Server S übermittelt. Bevor eine Assoziation zwischen der öffentlichen Identität IMPU und der Kontaktadresse CA1 vorgenommen wird, erfolgt eine Authentifizierung nach dem bekannten Challenge-Response-Verfahren. Zu diesem Zweck sendet der Server S an den Netzknoten UE1 eine SIP 401-Nachricht, in der er eine sog. Challenge an UE1 überträgt. UE1 antwortet mit einer SIP Register-Nachricht (SIP REG), in der der Netzknoten UE1 wiederum die öffentliche Identität IMPU sowie die Kontaktadresse CA1 an den Server überträgt. Zusätzlich enthält die SIP Register-Nachricht eine sog. Response in Reaktion auf die Challenge des Servers S. In dieser Response werden Daten übertragen, welche sich aus einer privaten Identität IMPI und einer Anzahl an Credentials Cred ermitteln. Nach Überprüfung der erhaltenen Daten durch den Server S wird eine SIP 200 OK Nachricht an den Netzknoten UE1 übertragen. Damit ist eine Registrierung des Netzknotens UE1 an dem Server und innerhalb des Kommunikationsnetzwerks hergestellt und ferner eine zeitlich begrenzte Assoziation (Binding) zwischen der Kontaktadresse CA1 und den Identifikationsparametern IMPU, IMPI und Credentials hergestellt. UE1 ist nunmehr in der Lage, IMS Dienste des Kommunikationsnetzwerks zu beziehen.

Im Weiteren wird davon ausgegangen, dass der Netzknoten UE1 vor dem zeitlichen Ablauf der Assoziation einen Fehler aufweist und somit eine Kommunikationsverbindung des Netzknotens UE1 zu dem Kommunikationsnetzwerk nicht mehr besteht. Ferner wird angenommen, dass ein weiterer Netzknoten UE2 sich in dem Kommunikationsnetzwerk registrieren möchte. Zu diesem Zweck sendet der Netzknoten UE2 eine SIP Register-Nachricht (SIP REG) an den Server, welcher seine öffentliche Identität IMPU und eine Kontaktadresse CA2 umfasst, welche von der Kontaktadresse CA1 von UE1 verschieden ist. Es wird weiter davon ausgegangen, dass die private Identität IMPU und die Credentials, ebenso wie die öffentliche Identität IMPU, den Daten des Netzknotens UE1 entsprechen. In der oben beschriebenen Weise wird eine Authentifizierung der öffentlichen Identität IMPU unter Verwendung der privaten Identität IMPI und der Credentials vorgenommen. Zu diesem Zweck werden eine SIP 401 Nachricht sowie eine SIP Register-Nachricht SIP REG ausgetauscht.

Da der Server S noch von einer gültigen Assoziation der Kontaktadresse CA1 und der Identitätsparameter IMPU, IMPI und Credentials des Netzknotens UE1 ausgeht, löst er diese Assoziation zunächst nicht auf. Vielmehr wird eine SIP-Nachricht im Ausführungsbeispiel eine SIP-Notify-Nachricht an die Kontaktadresse CA1 und somit den Netzknoten UE1 übertragen. Im Ausführungsbeispiel erhält der Server S innerhalb einer vorgegebenen Zeitspanne keine Antwort auf seine Anfrage-Nachricht, da UE1 einen Fehler aufweist. Hieraus schließt der Server, dass die Assoziation ungültig ist und überträgt eine SIP 200 OK Nachricht an den Netzknoten UE2, wodurch eine neue Assoziation zu einer Kontaktadresse CA2 geschaffen ist.

Um die Gültigkeit einer Assoziation zu überprüfen, eignet sich prinzipiell jede beliebige SIP-Nachricht. So könnte beispielsweise auch eine SIP-Option-Anfrage an den Netzknoten UE1 gerichtet werden, zu dem die Assoziation besteht. Im Fall einer positiven Antwort-Nachricht oder einer SIP negativen Antwort-Nachricht (z.B. SIP 405), welche von dem Netzknoten der bestehenden Assoziation erhalten wird, wird auf eine gültige Assoziation geschlossen. Dadurch ist das Auflösen der Assoziation unterbunden. Im Fall einer ausbleibenden Antwort-Nachricht oder einer anderen negativen Antwort-Nachricht innerhalb einer vorgegebenen Zeitspanne kann darauf geschlossen werden, dass die Assoziation nicht mehr gültig ist. In diesem Fall kann die bestehende Assoziation aufgelöst und durch eine neue ersetzt werden.

Hierdurch kann der eingangsbeschriebene Effekt des "Togglens" vermieden werden. Gleichzeitig kann ein Netzknoten, der sich beispielsweise nach einem Fehler rebootet, eine neue Assoziation erstellen. Die vorgeschlagene Lösung erfordert keine besonderen Anforderungen an die Netzknoten und kann mit allen existierenden Netzknoten-Implementierungen zusammenarbeiten. Ein wichtiger Vorteil besteht darin, dass das Entfernen einer ungültigen Assoziation und Ersetzen durch eine neue Assoziation weiterhin unterstützt wird. Die Erfindung beeinträchtigt existierende Spezifikationen oder Implementierungen nicht oder kaum. Das Verfahren kann auf einfache Weise durch das Überprüfen von SIP-Nachrichten realisiert werden.

## Patentansprüche

1. Verfahren zum Betreiben eines Kommunikationsnetzwerks, das einen Server (S) und zumindest einen Netzknoten (UE) aufweist, wobei dem zumindest einen Netzknoten eine öffentliche Identität (IMPU) zugewiesen ist, bei dem
- zwecks Registrierung des zumindest einen Netzknotens (UE) an dem Server (S) eine Assoziation zwischen der öffentlichen Identität (IMPU) und zumindest einem Authentifizierungsparameter (IMPI, Cred) des zumindest einen Netzknotens (UE) einerseits und einer Kontaktadresse (CA) andererseits hergestellt wird, so dass nach Herstellung der Assoziation durch den zumindest einen Netzknoten (UE) ein Dienst des Kommunikationsnetzwerks in Anspruch genommen werden kann; und
- die Assoziation zwischen der öffentlichen Identität (IMPU) und dem zumindest einen Authentifizierungsparameter (IMPI, Cred) des zumindest einen Netzknotens (UE) und der Kontaktadresse vor einem Auflösen überprüft wird.

2. Verfahren nach Anspruch 1 bei dem die Assoziation nur dann gelöst wird, wenn bei der Überprüfung die Ungültigkeit der Assoziation festgestellt wird.

3. Verfahren nach Anspruch 1 oder 2, bei dem zur Überprüfung der Assoziation von dem Server eine Anfrage-Nachricht an die Kontaktadresse (CA) des zumindest einen Netzknotens übertragen wird.

4. Verfahren nach Anspruch 3, bei dem im Fall einer Antwort-Nachricht von der Kontaktadresse des zumindest einen Netzknotens an den Server eine gültige Assoziation angenommen wird, welche nicht aufgelöst wird.

5. Verfahren nach Anspruch 3, bei dem im Fall einer negativen Antwort-Nachricht von der Kontaktadresse des zumindest einen Netzknotens an den Server aus dem Inhalt der Antwort-Nachricht auf die Gültigkeit oder Ungültigkeit der Assoziation geschlossen wird.

6. Verfahren nach Anspruch 3, bei dem im Fall einer ausbleibenden Antwort-Nachricht auf die Ungültigkeit der Assoziation geschlossen wird.

7. Verfahren nach einem der vorherigen Ansprüche, bei dem erst nach dem Auflösen der Assoziation zwischen der öffentlichen Identität (IMPU) und dem zumindest einen Authentifizierungsparameter (IMPI, Cred) des zumindest einen Netzknotens (UE) und einer Kontaktadresse (CA) das Herstellen einer neuen Assoziation zwischen der öffentlichen Identität (IMPU) und zumindest einen Authentifizierungsparameter (IMPI, Cred) des zumindest einen Netzknotens (UE) und dieser Kontaktadresse (CA) möglich ist.

8. Verfahren nach einem der vorherigen Ansprüche, bei dem die Anfrage-Nachricht eine SIP-Nachricht ist.

9. Verfahren nach einem der vorherigen Ansprüche, bei dem die Antwort-Nachricht eine SIP-Nachricht ist.

10. Verfahren nach einem der vorherigen Ansprüche, bei dem das Kommunikationsnetzwerk nach dem 3GPP-Standard betrieben wird.

11. Verfahren nach einem der vorherigen Ansprüche, bei dem das Kommunikationsnetzwerk als UMTS- und/oder GSM-Netzwerk betrieben wird.

12. Computerprogrammprodukt, das direkt in den internen Speicher eines digitalen Computers geladen werden kann und Softwarecodeabschnitte umfasst, mit denen die Schritte gemäß einem der vorherigen Ansprüche ausgeführt werden, wenn das Produkt auf einem Computer läuft.

13. Kommunikationsnetzwerk, das einen Server (S) und zumindest einen Netzknoten (UE) aufweist, wobei dem zumindest einen Netzknoten eine öffentliche Identität (IMPU) zugewiesen ist, das dazu ausgebildet ist
- zwecks Registrierung des zumindest einen Netzknotens (UE) an dem Server (S) eine Assoziation zwischen der öffentlichen Identität (IMPU) und zumindest einem Authentifizierungsparameter (IMPI, Cred) des zumindest einen Netzknotens (UE) einerseits und einer Kontaktadresse (CA) andererseits herzustellen, so dass nach Herstellung der Assoziation durch den zumindest einen Netzknoten (UE) ein Dienst des Kommunikationsnetzwerks in Anspruch genommen werden kann; und
- die Assoziation zwischen der öffentlichen Identität (IMPU), dem zumindest einen Authentifizierungsparameter (IMPI, Cred) des zumindest einen Netzknotens (UE) und der Kontaktadresse vor einem Auflösen zu überprüfen.

14. Server für ein Kommunikationsnetzwerk, das neben dem Server (S) zumindest einen Netzknoten (UE) aufweist, wobei dem zumindest einen Netzknoten eine öffentliche Identität (IMPU) zugewiesen ist, der dazu ausgebildet ist
- zwecks Registrierung des zumindest einen Netzknotens (UE) an dem Server (S) eine Assoziation zwischen der öffentlichen Identität (IMPU) und zumindest einem Authentifizierungsparameter (IMPI, Cred) des zumindest einen Netzknotens (UE) einerseits und einer Kontaktadresse (CA) andererseits herzustellen, so dass nach Herstellung der Assoziation durch den zumindest einen Netzknoten (UE) ein Dienst des Kommunikationsnetzwerks in Anspruch genommen werden kann; und
- die Assoziation zwischen der öffentlichen Identität (IMPU), zumindest einen Authentifizierungsparameter (IMPI, Cred) des zumindest einen Netzknotens (UE) und der Kontaktadresse vor einem Auflösen zu überprüfen.
